# EUROPÄISCHE PATENTSCHRIFT

(11) **EP 1 528 966 B1**
(45) Veröffentlichungstag und Bekanntmachung des Hinweises auf die Patenterteilung: **15.04.2009**
(21) Anmeldenummer: 03790670.8
(22) Anmeldetag: 02.08.2003
(51) Int. Cl.: B23D 37/00, B23C 5/24

(54) **SCHEIBENFÖRMIGES ODER LEISTENFÖRMIGES WERKZEUG**
DISK-SHAPED OR STRIP-SHAPED TOOL
OUTIL EN FORME DE DISQUE OU DE BANDE

(30) Priorität: 13.08.2002 DE 10237656; 22.08.2002 DE 10238451; 03.06.2003 DE 10325265
(43) Veröffentlichungstag der Anmeldung: 11.05.2005
(73) Patentinhaber: Kennametal Widia Produktions GmbH & Co. KG, 45145 Essen (DE)
(72) Erfinder: BAUER, Manfred, 90574 Rosstal (DE); GESELL, Reinhold, 91629 Weihenzell (DE); GNIBL, Günther, 91586 Lichtenau (DE)
(74) Vertreter: Vomberg, Friedhelm
(86) Internationale Anmeldenummer: PCT/DE2003/002604
(87) Internationale Veröffentlichungsnummer: WO 2004/020133

(56) Entgegenhaltungen:
- EP-A- 0 499 280
- DE-A- 10 027 945
- FR-A- 1 403 805
- FR-A- 2 246 345
- US-A- 5 120 166
- US-A- 6 079 912

## Beschreibung

Die Erfindung betrifft ein scheibenförmiges oder leistenförmiges Werkzeug gemäß dem Oberbegriff des Anspruchs 1, für die spanende Bearbeitung, insbesondere zum Schneiden von Profilen an einem Werkstück, wie einer während der Bearbeitung rotierend bewegten Kurbelwelle, mit mehreren umfangseitig an einen Werkzeuggrundhalter radial eingespannten Schneideinsätzen. Ein solches Werkzeug ist aus der DE 100 27 945 A1 bekannt.

Bereits in der EP 0 830 228 B1 werden scheibenförmige Hochgeschwindigkeitswerkzeuge beschrieben, die derart angetrieben werden, dass die spanende Bearbeitung mit Schnittgeschwindigkeiten von über 160 m/min durchgeführt wird. Insbesondere bei der spanenden Bearbeitung von Kurbelwellen und hier speziell für die Fertigung von Unterstichen werden Scheibenfräser verwendet, bei denen der Werkzeuggrundkörper, an dem die Schneideinsätze umfangseitig radial eingespannt sind, als Vollkreis-Scheibe ausgebildet sind. Beim Außenfräsen von Kurbelwellen werden sowohl die Kurbelwelle als auch das Fräswerkzeug rotierend bewegt.

Die vorliegende Erfindung schließt jedoch auch solche Werkzeuge ein, die als Drehwerkzeuge in sogenannten Drehräum- oder Dreh-Drehräum-Verfahren verwendet werden. Beim Drehräumen wird ein lineares Drehräum-Werkzeug in radialer Richtung auf das zu bearbeitende rotierende Werkstück zugestellt. Bei Dreh-Drehräum-Maschinen sind auf einem Teilkreisumfang eines flachen Werkzeugträgers mehrere aufeinanderfolgende Schneideinsätze angeordnet, die schrittweise kontinuierlich längs einem ersten Abschnitt des Scheibenumfangs zunehmen. Dieses Werkzeug, wird entlang eines Teilkreisbogen in radialer Richtung auf das rotierend bewegte Werkstück eingeschwenkt, wie dies prinzipiell in der EP 0 313 644 B1 oder der EP 0 286 771 beschrieben wird. Sowohl bei Linearwerkzeugen als auch bei Scheibenfräsern oder Dreh-Drehräum-Werkzeugen mit jeweils radial eingespannten Schneideinsätzen, welche vorzugsweise eine in der WO 99/12685 dargestellte und beschriebene Kontur haben, besteht bei nach dem Stand der Technik bekannten Konstruktionen keine Möglichkeit zur axialen und radialen Feineinstellung. Bereits aufgrund von Fertigungstoleranzen, denen die Werkzeuge und Werkzeughalter unterliegen, ergeben sich hieraus Fertigungsungenauigkeiten.

Es ist Aufgabe der vorliegenden Erfindung, ein Werkzeug zu schaffen, das eine axiale und/oder radiale Einstellmöglichkeit für die auf dem Werkzeuggrundträger angeordneten radial eingespannten Schneideinsätze liefert. Dieses Werkzeug soll konstruktiv einfach aufgebaut und leicht handhabbar sein.

Diese Aufgabe wird durch das Werkzeug gemäß Anspruch 1 gelöst. Erfindungsgemäß ist mindestens ein Schneideinsatz auf einem kassettenförmigen Träger befestigt, der mittels eines ersten Verstellkeiles im Bereich der Auflagerfläche für den Schneideinsatz axial und/ggf. mittels eines zweiten Verstellkeiles radial verstellbar ist. Die Schneideinsätze, die axial und/oder radial verstellt werden sollen, werden auf einem kassettenförmigen Träger (und nicht wie z. T. nach dem Stand der Technik üblich, auf dem Werkzeuggrundträger unmittelbar) befestigt, wobei dieser Träger über die genannten Verstellkeile axial und/ggf. radial verstellbar ist. Der kassettenförmige Träger für den Schneideinsatz besitzt eine zweifach abgewinkeite, etwa Z-förmige Kontur, deren oberer Teil vorderseitig die Auflagefläche für den Schneideinsatz bildet, wobei die Rückseite des oberen Teils an einem Verstellkeil anliegt. Der untere, zum oberen Teil parallel versetzte Teil des kassettenförmigen Trägers ist mittels einer Befestigungsschraube, die eine Bohrung durchgreift, an dem scheibenförmigen Werkzeuggrundträger befestigt, wobei der obere und der untere Teil über einen mittleren Quersteg verbunden sind. Durch eine Lageänderung des Verstellkeiles ist der obere Teil zu unterschiedlichen Axiallagen durch Biegung verschwenkbar. Durch die Z-förmige Kontur des kassettenförmigen Teils ist eine gewisse Elastizität gegeben, aufgrund der der Oberteil dieses Trägers entlang einer Schwenkachse, die im Bereich des Querstegs liegt, um ein geringes Maß verschwenkbar ist. Da auf dem oberen Teil des kassettenförmigen Trägers der Schneideinsatz fest montiert ist, ist dieser in entsprechender Weise verschwenkbar.

Bevorzugte Ausführungsformen der Erfindung und Weiterentwicklungen werden in den Unteransprüchen beschrieben.

Bevorzugt beträgt der axiale Verstellbereich des Schneideinsatzes 0,1 bis 0,3 mm, was durch Material und geometrischen Aufbau des kassettenförmigen Trägers gewährleistet werden kann. Die Obergrenze liegt jedenfalls deutlich unter dem Maß, bei dem eine inelastische Verformung des kassettenförmigen Trägers auftritt.

Zur Fixierung am scheibenförmigen Werkzeuggrundträger besitzt der untere Teil des kassettenförmigen Trägers eine Gewindebohrung, in die eine in dem Werkzeugträger befestigte Schraube eingreift. Vorzugsweise wird hierzu eine Inbusschraube gewählt, die im unteren Teil des kassettenförmigen Trägers von der Rückseite her eingeschraubt wird.

Soll ggf. zusätzlich eine radiale Verstellung der Schneidwerkzeuge gewünscht sein, so ist hierzu ein zweiter Verstellkeil vorgesehen, der an der unteren Seitenfläche des Trägers anliegt. Je nach Änderung der Lage dieses Verstellkeiles wird die Kassette und damit der Schneideinsatz radial verschoben.

Vorzugsweise besitzt der untere Teil des kassettenförmigen Trägers eine abgestufte Durchbrechung zur Aufnahme des Schaftes und des Kopfes einer Spannschraube, deren Kopf im Spannzustand mit der Stirnfläche an einer entsprechenden Stirnfläche der Durchbrechungsstufe anliegt. Der Gewindeschaft der Spannschraube greift in eine Gewindebohrung des Werkzeuggrundhalters ein. Anders als im vorbeschriebenen Fall wird die Spannschraube von der Vorderseite her in den unteren Teil des kassettenförmigen Trägers eingeführt und in eine entsprechende Bohrung des scheibenförmigen Werkzeuggrundkörpers bis zur Spannanlage eingedreht.

Die verwendeten Verstellkeile besitzen vorzugsweise eine durchgehende Gewindebohrung, in die ein .Gewindeteil einer Doppelgewindeschraube eingreift, deren anderer Gewindeteil in eine entsprechend vorgesehene Gewindebohrung des Werkzeuggrundhalters eingreift. Durch Drehung dieser Doppelgewindeschraube kann somit die relative Lage des Verstellkeils zum kassettenförmigen Träger verändert werden.

Zur Lagesicherung des kassettenförmigen Trägers nach erfolgter Verstellung ist eine Konterschraube vorgesehen, die in eine abgestufte Bohrung des Werkzeuggrundhalters einerseits und eine Gewindesacklochbohrung an der Rückseite des oberen Teils des kassettenförmigen Trägers eingreift.

Um die exakte Einstellung der Lage des Schneideinsatzes weiter zu verbessern, liegt nach einer Weiterbildung der Erfindung die Befestigungsschraube zur Fixierung des kassettenförmigen Trägers 12 an dem scheiben- oder leistenförmigen Leistengrundhalter im Spannzustand unter einer in axialer und/oder radialer Richtung wirksamen Vorspannung an.

Vorzugsweise werden als Schneideinsätze Wendeschneidplatten mit einem polykristallinen Diamant (PKD-)Einsatz verwendet.

Nach einer Weiterbildung der Erfindung ist zusätzlich zu den radial eingespannten Schneideinsätzen an dem scheibenförmigen Werkzeuggrundhalter mindestens ein tangential eingespannter Schneideinsatz oder an einem leistenförmigen Werkzeuggrundhalter mindestens ein auf der oberen Stirnseite eingespannter Schneideinsatz angeordnet. Dieser zusätzliche Schneideinsatz oder diese zusätzlichen Schneideinsätze dienen zur Bearbeitung der Außendurchmesserprofile eines Werkstückes, insbesondere zur Bearbeitung der Zapfenaußendurchmesserprofile von Kurbelwellen. Der oder diese Schneideinsätze sind ebenfalls in radialer Richtung verstellbar.

Vorzugsweise ist der tangential oder der auf der oberen Stirnseite angeordnete Schneideinsatz in einer Kassette eingespannt, die in einer Werkzeughalterausnehmung angeordnet ist. Zur Verstellung der Kassette und damit des betreffenden Schneideinsatzes in radialer Richtung ist ein Stellkeil vorgesehen. Ferner dient vorzugsweise zur Arretierung der Kassette ein Klemmkeil.

Der Klemmkeil und/oder der Stellkeil werden nach einer Weiterentwicklung der Erfindung mittels einer Doppelgewirideschräube befestigt, die einerseits in einer Durchgangsgewindebohrung des Stellkeites bzw. des Klemmkeiles und andererseits in einer Gewindebohrung des Werkzeughalters befestigt ist.

Um einen weichen Schnitt beim Zerspanen zu gewährleisten und auf dem vorhandenen Werkzeuggrundhalter eine möglichst große Anzahl von Schneideinsätzen anzuordnen, können die tangential bzw. stirnseitig eingespannten Schneideinsätze entsprechend der DE 100 27 945 A1 angeordnete sein. In dieser Druckschrift werden vorzugsweise geeignete axiale Neigungswinkel sowie Abstände der Schneideinsätze untereinander beschrieben.

Weitere Vorteile und Ausgestaltungen der Erfindung werden anhand der Zeichnungen erläutert. Es zeigen
- Fig. 1: ein Fräswerkzeug mit radial eingespannten und axial verstellbaren Schneideinsätzen, wovon Teile in einer Explosionsdarstellung abgebildet sind,
- Fig. 2: das Werkzeug nach Fig. 1 in zusammengebautem Zustand,
- Fig. 3: ein Fräswerkzeug mit radial eingespannten und sowohl in radialer wie in axialer Richtung verstellbaren Schneideinsätzen, z.T. in einer Explosionsdarstellung;
- Fig. 4: eine andere Ansicht des Werkzeugs nach Fig. 3, teilweise in einer Explosionsdarstellung,
- Fig. 5: das Werkzeug nach Fig. 3 oder 4 in zusammengebautem Zustand und
- Fig. 6: ein Fräswerkzeug mit radial eingespannten und axial eingespannten Schneideinsätzen, die jeweils in radialer Richtung verstellbar sind, wobei Teile des Werkzeuges in einer Explosionsdarstellung abgebildet sind.

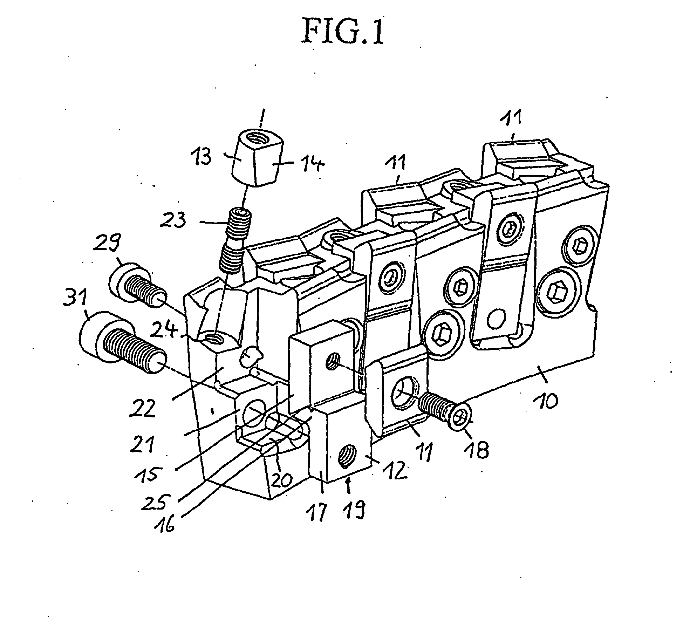

Wie bereits vorstehend erwähnt, kann je nach gewähltem Arbeitsverfahren der Werkzeuggrundhalter 10 als Scheibenfräser oder leistenförmig als Werkzeug zum Drehräumen oder Dreh-Drehräumen oder sonstiger Körper mit einem teilringförmigen Segment ausgebildet sein. Umfangseitig oder randseitig weist der Werkzeuggrundhalter radial eingespannte Schneidwerkzeuge auf; im vorliegenden Fall drei an jeder Seite. Die Schneideinsätze besitzen eine zum Schneiden von Profilen, insbesondere Nuten oder Unterstichen an Kurbelwellen geeignete Form. Beispielsweise können Schneideinsätze der in der WO 99/12685 beschriebenen Ausgestaltung verwendet werden. Bei der in Fig. 1 dargestellten Ausführungsform sind alle Schneideinsätze 11 axial verstellbar angeordnet. Hierzu wird ein kassettenförmiger Träger 12 sowie ein Verstellkeil 13 mit einer Keilfläche 14 verwendet. Der kassettenförmige Träger 12 besteht aus einem oberen Teil 15, einem Quersteg 16 sowie aus einem unteren Teil 17, die eine einstückige Einheit mit einer abgewinkelten, etwa Z-förmigen Kontur bilden. Der Schneideinsatz 11 ist mittels einer Befestigungsschraube 18 auf dem kassettenförmigen Träger 12 befestigt. Der Werkzeuggrundhalter 10 besitzt eine der dargestellten Z-Form des Trägers 12 angepaßte Aufnahme, so dass die untere Seite 19 des Trägers 12 auf der Fläche 20 aufliegt wie die Rückseite des Unterteils auf der Fläche 21 bzw. die Rückseite des Oberteils auf der Fläche 22.

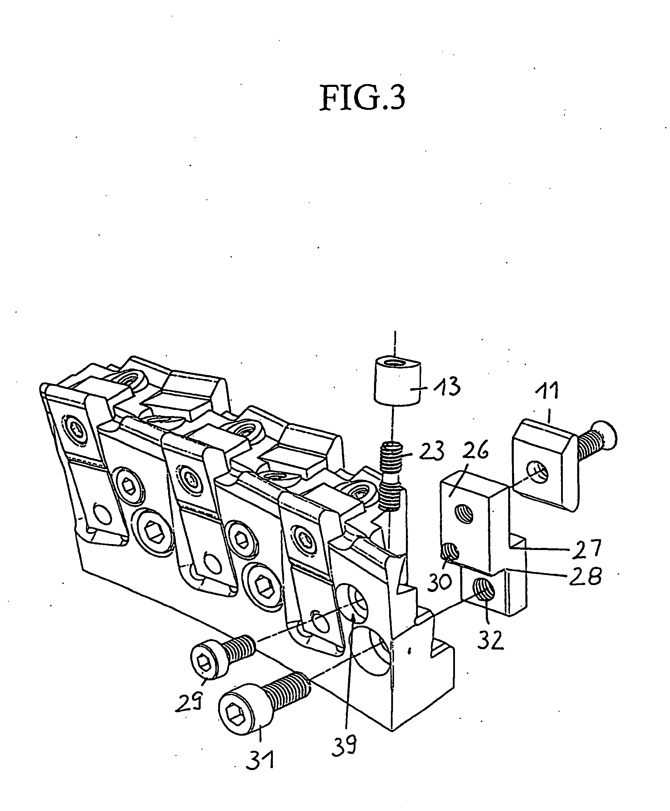

Der Verstellkeil 13 besitzt eine Durchgangsbohrung, in die der Gewindeteil einer Doppelgewindeschraube 23 eingeschraubt ist, deren-anderer Gewindeteil in eine Bohrung 24 des Werkzeuggrundhalters eingeschraubt ist. Durch Betätigung der Doppeigewindeschraube 23 laßt sich der Verstellkeil 13 entlang der Längsachse der Doppelgewindeschraube linear verschieben. Da die Keilfläche 14 an der Rückseite des Oberteils 15 anliegt, wird bei entsprechender Lageänderung des Verstellkeiles 13 Druck auf die Rückseite 26 (siehe Fig. 3) des oberen Teils 15 ausgeübt, der schließlich zu einem Wegbiegen des oberen Teils 15 durch Verschwenkung entlang einer Linie 25, die zwischen den, Punkten 27 und 28 (siehe Fig. 3) liegt. Im Bereich der elastischen Verformbarkeit des Trägers 12 kann somit der Schneideinsatz 11 axial um bis zu 0,3 mm verstellt werden. Ist die gewünschte Axiallage des Schneideinsatzes 11 erreicht, wird mit Hilfe der Zylinderschraube 29, die in die Gewindebohrung 30 an der Rückseite 26 eingreift, festgeklemmt. Für die Fixierung des unteren Teils 17 des Trägers 12 sorgt eine vorzugsweise größer dimensionierte Zylinderschraube 31, die mit ihrem Gewindeschaft in die Gewindebohrung 32 des unteren Teils 17 des Trägers 12 eingreift. Die Schneideinsätze 11 sind auf jeder Seite im Abstand zueinander und von Seite zu Seite gesehen versetzt zueinander angeordnet, wodurch zwischen zwei Schneideinsätzen auf einer Seite Raum für die Durchgangsbohrungen zur Durchführung und Befestigung der Schrauben 29 und 31 für die versetzt gegenüberliegend angeordnete Schneidplatte geschaffen wird.

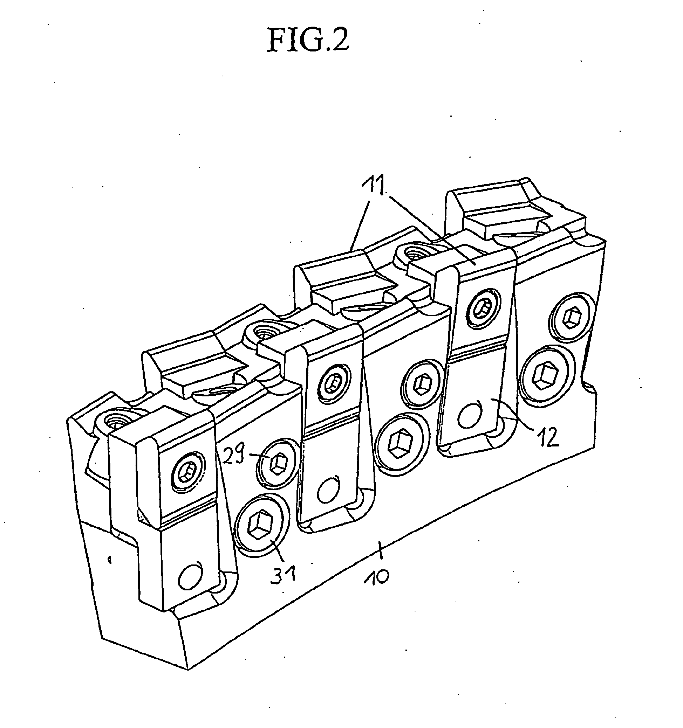

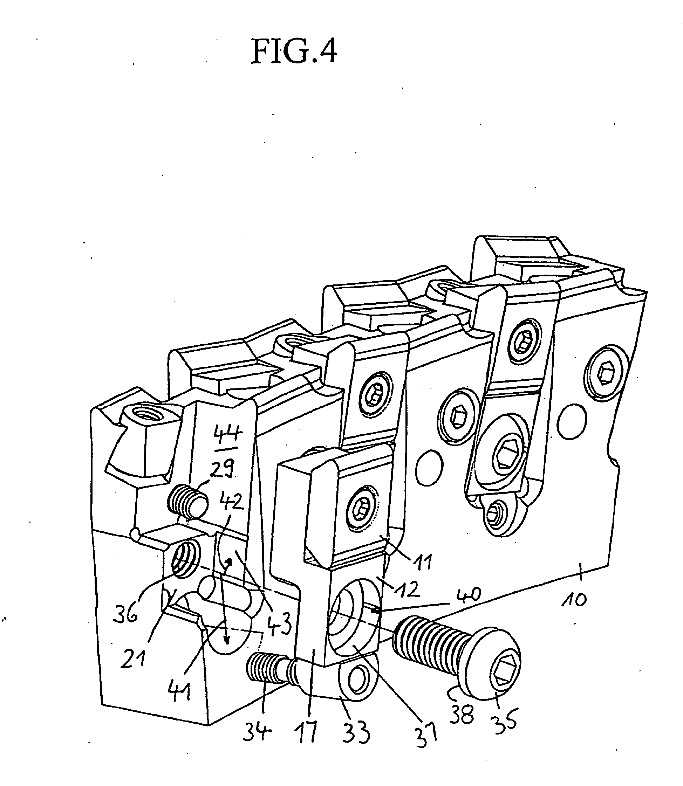

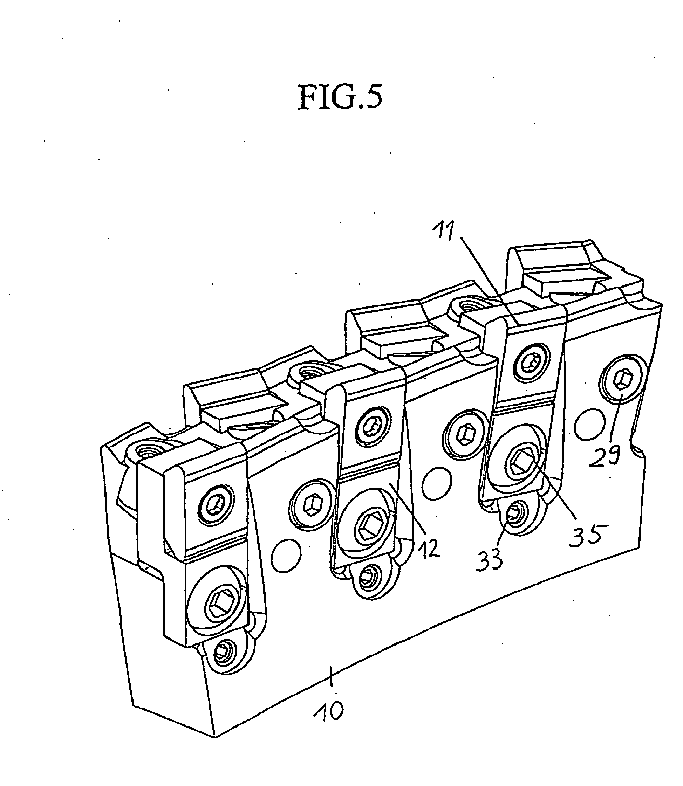

Zusätzlich zur axialen Verstellbarkeit sind die .Schneideinsätze 11 gemäß der Ausführungsform nach Fig. 4 und 5 radial verstellbar (vergl. Fig. 4 und 5). Zur radialen Verstellung des Trägers 12 dient ein Verstellkeil 33, der prinzipiell ebenso wie der Verstellkeil 13 ausgebildet ist und der über eine Doppelgewindeschraube 34 linear verschoben werden kann. Dieser Verstellkeil liegt an der unteren Fläche des Trägers 12 an. Bei entsprechender Drehung der Doppelgewindeschraube 34 wird der . Träger 12 radial auswärts bewegt und mit ihm der hierauf befestigte Schneideinsatz 11. Im Unterschied zur lediglich axialen Verstelleinrichtung nach Fig. 1 bis 3 dient die Keilfläche des Verstellkeils 33 (anstelle der Fläche 20) als untere Auflagefläche. Zur Fixierung des Trägers 12 dient die Spannschraube 35, die mit ihrem Gewindeschaft in eine Bohrung 36 des Werkzeuggrundkörpers 14 eingreift. Der untere Teil 17 des Trägers besitzt vorderseitig eine abgestufte Durchbrechung 40 mit einer ringförmigen Planfläche 37, an der im Spannzustand die entsprechende Ringfläche 38 der Spannschraube 35 zur Anlage kommt. Hinsichtlich der axialen Verstellmöglichkeit wird auf die vorstehende Beschreibung zu Fig. 1 bis 3 verwiesen. Die Bohrungen 40 und 39 (siehe Fig. 3 und 4) müssen so ausgebildet sein, dass die Schrauben 35 und 29 bei jeder gewählten radialen Einstellung der Schneideinsätze noch durchführbar sind bzw, gewünschte Radialverstellungen nicht blockieren. Die Fixierung erfolgt jeweils über eine Plananlage der Ringflächen der verwendeten abgestuften Bohrungen und des Schraubenkopfes.

Als zusätzliche Maßnahme, nämlich um die exakte Einstellung des Schneideinsatzes 11 zu gewährleisten, wird die Spannschraube in radialer Richtung (siehe Pfeil 41) und in axialer Richtung (siehe Pfeil 42) vorgespannt sein. Hierdurch wird eine zusätzliche Kraft in Richtung der Auflagefläche 20 (siehe Fig. 1) bzw. in Richtung des Verstellkeiles 33 in radialer Richtung und in Richtung der Fläche 43 und 44 in axialer Richtung ausgeübt. Diese Art Vorspannung kann sowohl bei lediglich axialer Verstellbarkeit als auch bei axialer und radialer Verstellbarkeit des Schneideinsatzes verwendet werden.

Im Unterschied zu dem in den Fig. 1 bis 5 dargestellten Werkzeug ist der Werkzeuggrundhalter 50 als Scheibenfräser sowohl zur Aufnahme von radial eingespannten Schneideinsätzen 11 als auch zur Aufnahme von tangential eingespannten Schneideinsätzen 51 ausgebildet. Entlang der Peripherie des Scheibenfräsers folgen sukzessive jeweils paarweise radial eingespannte Schneideinsätze 11 und tangential eingespannte Schneideinsätze 51 in alternierender Weise. Für die radiale Verstellbarkeit der radial eingespannten Schneideinsätze 11 gilt Entsprechendes wie zu Fig. 1 bis 5 erläutert. Die tangential eingespannten Schneideinsätze 51, die in einer Draufsicht eine rechteckige, insbesondere eine quadratische Dachfläche besitzen, sind in einer Ausnehmung einer Kassette 52 angeordnet und mittels einer Befestigungsschraube montiert. Die Kassette 52 wird durch einen Klemmkeil 53 mit Hilfe einer Doppelgewindeschraube 54 in einer Aussparung des Werkzeuggrundhalters 50 in Position gehalten. Zur radialen Verstellung der Kassette 52 ist ein Stellkeil 55 vorgesehen, der eine Gewindebohrung aufweist, in die eine Doppelgewindeschraube 56 eingreift, die mit ihrem anderen Ende in einer entsprechendes Gewindebohrung des Werkzeuggrundhalters 50 eingreift. Durch Betätigung der Doppelgewindeschraube wird der Stellkeil 55 verschoben, der entsprechend seiner Stellung über die obere Keilfläche 57 die Kassette 52 radial auswärts oder radial einwärts verschieben lässt. Zur Radiälverstellung der Kassette 52 sowie des Schneideinsatzes 51 wird jeweils zunächst der Klemmkeil 3 gelöst, anschließend über den Stellkeil 55 das gewünschte Radial-Maß eingestellt, wonach die Kassette mittels des Klemmkeiles arretiert wird.

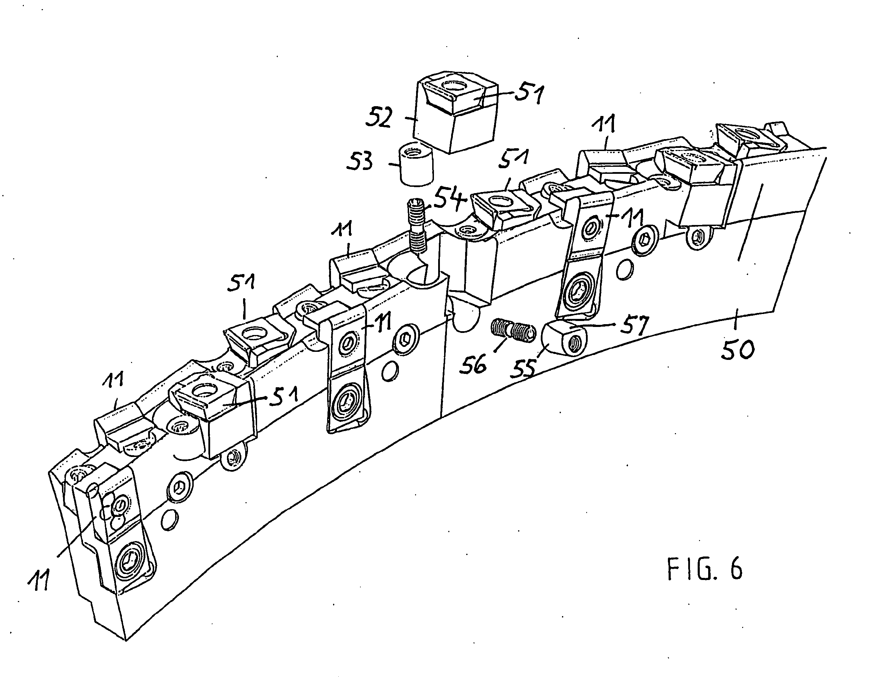

Das in Fig. 6 dargestellte Werkzeug kann insbesondere zur Bearbeitung einer Kurbelwelle verwendet werden.

Ebenso wie die Schneideinsätze 11 können auch die Schneideinsätze 51 einen PKD-Einsatz aufweisen und/oder als Wendeschneidplatten ausgebildet sein.

## Patentansprüche

1. Scheibenförmiges oder leistenförmiges Werkzeug für die spanende Bearbeitung, insbesondere zum Schneiden von Profilen an einem Werkstück wie einer während der Bearbeitung rotierend bewegten Kurbelwelle, mit mehreren umfangseitig oder randseitig radial an einen Werkzeuggnrndhalter (10, 50) eingespannten Schneideinsätzen (11), wobei mindestens ein Schneideinsatz (11) auf einem kassettenförmigen Träger (12) befestigt ist,
**dadurch gekennzeichnet,**
**dass** der kassettenförmige Träger (12) mittels eines ersten Verstellkeiles (13) im Bereich der Auflagefläche für den Schneideinsatz (11) axial und/ggf. mittels eines zweiten Verstellkeiles (33) radial verstellbar ist und dass der kassettenförmige Träger (12) eine zweifach abgewinkelte Kontur (15, 16, 17) aufweist, deren oberer Teil (15) vorderseitig die Auflagefläche für den Schneideinsatz (11) bildet und rückseitig an einem Verstellkeil (13) anliegt und dessen unterer, zum oberen Teil (15) parallel versetzter Teil (17) mittels einer Befestigungsschraube (31, 35), die eine Bohrung durchgreift, an dem scheibenförmigen Werkzeuggrundträger (10) befestigt ist, wobei der obere und der untere Teil (15, 17) über einen mittleren Quersteg (16) verbunden sind und wobei durch eine Lageänderung des Verstellkeiles (13) der obere Teil (15) zu unterschiedlichen Axiallagen durch Biegung verschwenkbar ist.

2. Werkzeug nach Anspruch 1, **gekennzeichnet durch** einen axialen Verstellbereich zwischen 0,1 mm bis 0,3 mm.

3. Werkzeug nach einem der Ansprüche 1 oder 2, **dadurch gekennzeichnet, dass** der untere Teil (17) des kassettenförmigen Träger (12) eine Gewindebohrung aufweist, in die rückseitig eine in dem Werkzeuggrundträger (10, 50) befestigte Schraube (31) eingreift.

4. Werkzeug nach einem der Ansprüche 1 bis 3, **dadurch gekennzeichnet, dass** zur radialen Verstellung des kassettenförmigen Trägers (12) ein zweiter Verstellkeil (33) vorgesehen ist, der an der unteren Seitenfläche des Trägers (12) anliegt und über dessen Lageänderung eine radiale Verstellung des Trägers (12) bewirkbar ist.

5. Werkzeug nach Anspruch 4, **dadurch gekennzeichnet, dass** der untere Teil (17) des kassettenförmigen Trägers (12) eine abgestufte Durchbrechung (40) zur Aufnahme des Schaftes und des Kopfes einer Spannschraube (35) aufweist, deren Kopf im Spannzustand mit der Stirnfläche (38) an der entsprechenden Stirnfläche (37) der Durchbrechungsstufe anliegt, wobei der Gewindeschaft der Spannschraube (35) in eine Gewindebohrung (36) des scheibenförmigen Werkzeuggrundträgers eingreift.

6. Werkzeug nach einem der Ansprüche 1 bis 5, **dadurch gekennzeichnet, dass** der erste und der zweite Verstellkeil (13, 33) eine durchgehende Gewindebohrung aufweist, in die ein Gewindeteil einer Doppelgewindeschraube (23, 34) eingreift, deren anderer Gewindeteil in eine Gewindebohrung des scheibenförmigen Werkzeuggrundträgers (10, 50) eingreift.

7. Werkzeug nach einem der Ansprüche 1 bis 6, **dadurch gekennzeichnet, dass** zur Lagesicherung des kassettenförmigen Trägers (12) eine Konterschraube (29) vorgesehen ist, die in eine abgestufte Bohrung des scheibenförmigen Werkzeuggrundhalters und eine Gewindesacklochbohrung (30) an der Rückseite des oberen Teils (15) des kassettenförmigen Trägers (12) eingreift.

8. Werkzeug nach einem der Ansprüche 1 bis 7, **dadurch gekennzeichnet, dass** die Befestigungsschraube zur Fixierung des kassettenförmigen Trägers (12) an dem scheiben- oder leistenförmigen Werkzeuggrundhalter (10, 50) im Spannzustand unter einer in axialer und/oder radialer Richtung wirksamen Vorspannung anliegt.

9. Werkzeug nach einem der Ansprüche 1 bis 8, **dadurch gekennzeichnet, dass** der Schneideinsatz (11) eine Wendeschneidplatte mit einem PKD-Einsatz ist.

10. Werkzeug nach einem der Ansprüche 1 bis 9, **dadurch gekennzeichnet, dass** an dem scheibenförmigen Werkzeuggrundhalter (50) zusätzlich mindestens ein tangential eingespannter Schneideinsatz (51) oder an einem leistenförmigen Werkzeuggrundhalter mindestens ein auf der oberen Stirnseite eingespannter Schneideinsatz angeordnet ist, wobei der oder mindestens ein tangential oder mindestens ein auf der oberen Stirnseite eingespannter Schneideinsatz (51) zur Bearbeitung der Außendurchmesserprofile eines Werkstückes in radialer Richtung verstellbar ist.

11. Werkzeug nach Anspruch 10, **dadurch gekennzeichnet, dass** der tangential, oder der auf der oberen Stirnseite angeordnete Schneideinsatz (51) in einer in einer Werkzeughalteraussparung angeordneten Kassette (52) eingespannt ist, die über einen Stellkeil (55) in radialer Richtung verstellbar ist.

12. Werkzeug nach Anspruch 11, **dadurch gekennzeichnet, dass** die Kassette (52) mittels eines Klemmkeiles (53) arretierbar ist.

13. Werkzeug nach Anspruch 11 oder 12, **dadurch gekennzeichnet, dass** der Klemmkeil (53) und/oder der Stellkeil (55) mittels einer Doppelgewindeschraube (54, 56), welche einerseits in eine Durchgangsbohrung des Stellkeiles (55) oder des Klemmkeiles (53) und andererseits in eine Gewindebohrung des Werkzeughalters (50) eingreift.

## Claims

1. Disk- or bar-shaped tool for chip-removing machining, in particular for cutting profiles in a workpiece such as a rotationally driven crankshaft to be machined, having several peripheral cutting inserts (11) or such radially clamped to a tool mount (10, 50), whereby at least one cutting insert (11) is fixed in a cassette-shaped holder (12) **characterised in that** the cassette-shaped holder (12) is axially adjustable by means of an adjustment wedge (13) near where it bears on the cutting insert (11) and where necessary is radially adjustable by an adjustment wedge (33) and that the cassette-shaped holder (12) has a doubly bent shape (15, 16, 17) with an upper part (15) having a front face forming the support surface for the cutting insert (11) and a back face bearing on an adjustment wedge (13), and a lower part (17) extending parallel to but offset from the upper part (15) is fixed on the disk-shaped mount (10) by means fo a mounting screw (31, 35) passing through a bore, the upper and lower parts (15 and 17) being connected by a central transverse web (16) and wherein the adjustment wedge (13) can shift the upper part (15) into different axial positions by bending.

2. Tool according to claim 1, **characterised by** an axial range of adjustment between 0.1 mm and 0.3 mm.

3. Tool according to one of claims 1 or 2, **characterized in that** the lower part (17) of the cassette-shaped holder (12) has a threaded bore into the rear of which engages a screw (31) seated in the tool mount (10, 50).

4. Tool according to one of claims 1 to 3, **characterised in that** to radially adjust the cassette-shaped holder (12) there is a second adjustment wedge (33) that bears on a lower side face of the holder (12) and that is movable to effect a radial adjustment of the holder (12).

5. Tool according to claim 4, **characterised in that** the lower part (17) of the cassette-shaped holder (12) has a stepped bore (40) accommodating a shaft and a head of a mounting screw (35) whose head bears with a face (38) on a complementary shoulder (37) of the stepped bore, a shaft of the mounting screw (35) engaging in a threaded bore (36) of the disk-shaped tool mount.

6. Tool according to one of claims 1 to 5, **characterised in that** the adjustment wedge (13, 33) has a throughgoing threaded bore receiving a threaded end of a double-threaded screw (23, 34) whose other end is engaged in a threaded bore of the disk-shaped tool mount (10, 50).

7. Tool according to one of claims 1 to 6, **characterised in that** to clamp the cassette-shaped holder (12) in place there is a counter screw (29) that engages in a stepped bore of the disk-shaped tool mount and a threaded blind bore (30) in a back face of the upper part (15) of the cassette-shaped support (12).

8. Tool according to one of claims 1 to 7, **characterised in that** the mounting screw for clamping the cassette-shaped holder (12) bears with axially and/or radial prestress on the disk- or bar-shaped tool mount (10, 50).

9. Tool according to one of claims 1 to 8, **characterised in that** the cutting insert (11) is indexable and has a PKD insert.

10. Tool according to one of claims 1 to 9, **characterised in that** the disk-shaped tool mount (50) carries at least one tangentially clamped cutting insert (51) or a bar-shaped tool mount carries on its upper edge a clamped cutting insert, wherein the cutting insert (51) that is tangentially clamped or clamped to the upper edge is radially adjustable for working the outer surface profile of a workpiece.

11. Tool according to claim 10, **characterised in that** the tangentially or upper-edge-mounted cutting insert (51) is fixed in a cassette (52) that is mounted in a tool-mount seat and is adjustable radially by an adjustment wedge (55).

12. Tool according to claim 11, **characterised in that** the cassette (52) is clamped by at least one clamping wedge (53).

13. Tool according to claim 11 or 12, **characterised in that** the clamping wedge (53) and/or the adjustment wedge (55) are engaged by a double-threaded screw (54, 56) having one end engaged in a throughgoing hole of the adjustment wedge (55) or of the clamping wedge (53) and another end in a threaded bore of the tool mount (50).

## Revendications

1. Outil en forme de disque ou de barre destiné à l'usinage à enlèvement de copeaux, en particulier pour couper des profils sur une pièce, tel qu'un vilebrequin entraîné en rotation durant l'usinage, comprenant plusieurs inserts de coupe (11) serrés radialement sur un porte-outils de base (10, 50) sur la circonférence ou sur le bord de celui-ci, au moins un insert de coupe (11) étant fixé sur un support en forme de cassette (12), **caractérisé par le fait que** ledit support en forme de cassette (12) peut être réglé axialement au moyen d'une première cale de réglage (13), au niveau de la surface d'appui pour l'insert de coupe (11), et, le cas échéant, radialement par l'intermédiaire d'une seconde cale de réglage (33), et que le support en forme de cassette (12) présente un contour coudé deux fois (15, 16, 17) dont la partie supérieure (15) présente une face avant formant la surface d'appui pour l'insert de coupe (11) ainsi qu'une face arrière s'appuyant sur une cale de réglage (13), et dont la partie inférieure (17) décalée parallèlement par rapport à ladite partie supérieure (15) est fixée sur ledit porte-outils de base en forme de disque (10) par le biais d'une vis de fixation (31, 35) traversant un perçage, lesdites parties supérieure et inférieure (15, 17) étant reliées entre elles par une entretoise transversale centrale (16), et, en changeant la position de ladite cale de réglage (13), la partie supérieure (15) pouvant être pivotée par pliage dans des positions axiales différentes.

2. Outil selon la revendication 1, **caractérisé par** une plage de réglage axial comprise entre 0,1 mm et 0,3 mm.

3. Outil selon l'une quelconque des revendications 1 ou 2, **caractérisé par le fait que** ladite partie inférieure (17) du support en forme de cassette (12) présente un trou taraudé dans lequel se prend, par la face arrière, une vis (31) fixée dans ledit porte-outils de base (10, 50).

4. Outil selon l'une quelconque des revendications 1 à 3, **caractérisé par le fait qu'**une seconde cale de réglage (33) est prévue pour le réglage radial du support en forme de cassette (12), ladite seconde cale prenant appui sur la face latérale inférieure du support (12) et un changement de position de cette cale pouvant provoquer un réglage radial du support (12).

5. Outil selon la revendication 4, **caractérisé par le fait que** la partie inférieure (17) du support en forme de cassette (12) présente un perçage étagé (40) pour recevoir la tige et la tête d'une vis de serrage (35) dont la tête, en état serré, prend appui par sa face frontale (38) sur la face frontale correspondante (37) du gradin du perçage, la tige filetée de ladite vis de serrage (35) se prenant dans un trou taraudé (36) du porte-outils de base en forme de disque.

6. Outil selon l'une quelconque des revendications 1 à 5, **caractérisé par le fait que** lesdites première et seconde cales de réglage (13, 33) présentent un trou taraudé traversant dans lequel s'engage une partie filetée d'une vis double filet (23, 24) dont l'autre partie filetée se prend dans un trou taraudé du porte-outils de base en forme de disque (10, 50).

7. Outil selon l'une quelconque des revendications 1 à 6, **caractérisé par le fait que** l'on prévoit une contre-vis (29) pour assurer la position du support en forme de cassette (12), ladite contre-vis se prenant dans un perçage étagé du porte-outils de base en forme de disque et dans un trou taraudé borgne (30) ménagé sur la face arrière de ladite partie supérieure (15) du support en forme de cassette (12).

8. Outil selon l'une quelconque des revendications 1 à 7, **caractérisé par le fait que**, en état serré, la vis de fixation destinée à fixer le support en forme de cassette (12) s'appuie sur le porte-outils de base en forme de disque ou de barre (10, 50) sous une précontrainte agissant dans le sens axial et/ou radial.

9. Outil selon l'une quelconque des revendications 1 à 8, **caractérisé par le fait que** ledit insert de coupe (11) est une plaquette réversible comprenant un insert DPC.

10. Outil selon l'une quelconque des revendications 1 à 9, **caractérisé par le fait que** le porte-outils de base en forme de disque (50) porte en sus au moins un insert de coupe (51) serré tangentiellement ou qu'un porte-outils de base en forme de barre porte au moins un insert de coupe serré sur la face frontale supérieure, le ou au moins un insert de coupe (51) serré tangentiellement ou au moins un insert de coupe (51) serré sur la face frontale supérieure pouvant être réglé dans le sens radial pour usiner les profils de diamètre extérieur d'une pièce.

11. Outil selon la revendication 10, **caractérisé par le fait que** l'insert de coupe (51) disposé tangentiellement ou l'insert de coupe (51) disposé sur la face frontale supérieure est serré dans une cassette (52) qui est disposée dans un évidement du porte-outils et qui peut être réglée dans le sens radial au moyen d'une cale de réglage (55).

12. Outil selon la revendication 11, **caractérisé par le fait que** ladite cassette (52) peut être arrêtée par l'intermédiaire d'une cale de serrage (53).

13. Outil selon la revendication 11 ou 12, **caractérisé par le fait que** ladite cale de serrage (53) et/ou la cale de réglage (55) est ou bien sont fixée(s) au moyen d'une vis double filet (54, 56) qui se prend dans un trou traversant de la cale de réglage (55) ou de la cale de serrage (53) d'un côté et dans un trou taraudé du porte-outils (50) de l'autre côté.
